# EUROPEAN PATENT SPECIFICATION

(11) **EP 2 843 371 B1**
(45) Date of publication and mention of the grant of the patent: **10.10.2018**
(21) Application number: 14179963.5
(22) Date of filing: 06.08.2014
(51) Int. Cl.: G01D 5/14, G01D 11/30

(54) **Movement detecting device, actuator, and method of assembling actuator**
Bewegungsmeldervorrichtung, Aktuator, und Verfahren zur Montage eines Aktuators
Dispositif de détection de mouvement, actionneur et procédé d'assemblage d'actionneur

(30) Priority: 27.08.2013 JP 2013175242
(43) Date of publication of application: 04.03.2015
(73) Proprietor: Alps Electric Co., Ltd., Tokyo 145-8501 (JP)
(72) Inventor: Kodama, Yuji, Tokyo 145-8501 (JP); Hosogoe, Junichi, Tokyo 145-8501 (JP); Sato, Shuichi, Tokyo 145-8501 (JP)
(74) Representative: Schmitt-Nilson Schraud Waibel Wohlfrom Patentanwälte Partnerschaft mbB

(56) References cited:
- WO-A2-2012/006224
- US-A1- 2009 140 730
- US-A1- 2011 079 138

## Description

### CLAIM OF PRIORITY

This application claims benefit of Japanese Patent Application No. 2013-175242 filed on August 27, 2013.

### BACKGROUND OF THE INVENTION

### 1. Field of the Invention

The present invention relates to a movement detecting device that detects the operating position of a moving holder moved by a diaphragm, an actuator of which a housing receives the movement detecting device and the diaphragm, and a method of assembling the actuator.

### 2. Description of the Related Art

Japanese Unexamined Patent Application Publication No. 2011-505574 discloses a linear position sensor and a pneumatic actuator that is provided with the linear position sensor.

An inner space of a housing of the pneumatic actuator is partitioned by a diaphragm, and a plunger and a magnet carrier provided with a magnet are provided in one pressure chamber that is formed on one side of the diaphragm. A spring is provided in this pressure chamber, and the plunger is biased toward the other pressure chamber by the spring. The magnet is held by the magnet carrier, the housing is provided with a magnetism detecting element, and the magnet and the magnetism detecting element form a linear position sensor. When the diaphragm and the plunger are moved, the magnet carrier is moved together and the movement position of the magnet carrier is detected by the magnetism detecting element.

A shaft is provided in the other pressure chamber that is formed in the housing on the other side of the diaphragm. An end portion of the shaft is connected to the plunger and the diaphragm, and the shaft extends to the outside of the housing.

The pneumatic actuator is used in, for example, an exhaust gas recirculation device for an engine. In this device, the pressure of an intake system for an engine is applied to one pressure chamber that includes the magnet carrier and the diaphragm is moved on the basis of the amount of intake air of the intake system. The shaft is moved together with the movement of the diaphragm, and a waste gate valve is operated by the shaft. The moving distance of the diaphragm at this time is detected by the linear position sensor, and the amount of recirculated exhaust gas is more finely controlled on the basis of this detection output.

In an invention disclosed in Japanese Unexamined Patent Application Publication No. 2011-505574, the end portion of the shaft is connected and fixed to the plunger and the diaphragm and the magnet carrier including the magnet is fixed so as to cover and overlap a connecting portion between the end portion of the shaft and the plunger.

In this structure, work for fixing the magnet carrier, which holds the magnet, to the plunger so that the magnet carrier overlaps the plunger is needed after an assembly step of connecting the end portion of the shaft to the plunger. Accordingly, a step of connecting the plunger and the diaphragm to the shaft should be divided into at least two steps while being performed.

Further, since the magnet carrier needs to be assembled after the end portion of the shaft is connected to the plunger and the diaphragm, the plunger and the magnet carrier cannot be integrated in advance by an insert molding method, an outsert molding method, or the like. For this reason, since an error in the relative positional accuracy easily occurs between the movement of the plunger moved by the diaphragm, that is, the movement of the shaft and the movement of the magnet carrier, a variation in the detection accuracy of the linear position sensor easily occurs for each air pressure sensor.

The documents US2009/140730, US2011/079138 and WO2012/006224 disclose movement detecting devices according to the state of the art.

### SUMMARY OF THE INVENTION

The invention provides a movement detecting device that allows the assembly of a drive shaft and a moving holder to be performed by a minimum number of steps and accurately detects the movement of a magnet without a variation, an actuator, and a method of assembling the actuator.

According to an aspect of the invention, there is provided a movement detecting device including a housing, a moving holder that is moved in the housing together with a diaphragm, a magnet that is fixed to the moving holder, the magnet having a cylindrical shape; and magnetism detectors that are fixed to the housing and detect a magnetic field generated from the magnet. A holding portion that holds the magnet, a receiving portion to which a moving force is applied from the diaphragm, and a connecting portion where a drive shaft extending to the outside of the housing is mounted are formed at the moving holder. A space, which passes through an inner portion of the holding portion and reaches the connecting portion, is formed in the moving holder wherein the space passes through the inside of the magnet , and the magnet is mounted on the periphery of the holding portion.

In the movement detecting device according to the aspect of the invention, the drive shaft can be directly fixed to the moving holder through the space that is formed in the moving holder. Accordingly, an assembly step of connecting the drive shaft to the moving holder can be performed by a minimum number of steps. Further, since the drive shaft can be directly connected and fixed to the moving holder, the relative positions of the drive shaft and the magnet can be accurately maintained and the movement of the drive shaft can be detected with a small variation.

In the movement detecting device according to the aspect of the invention, the magnet may have a cylindrical shape and the space may pass through the inside of the magnet.

In the movement detecting device according to the aspect of the invention, the connecting portion may be formed at a central portion of the receiving portion of the moving holder.

Next, an actuator according to another aspect of the invention includes the above-mentioned movement detecting device. An inner space of the housing is partitioned into a first pressure chamber and a second pressure chamber by the diaphragm, the magnet and the holding portion are positioned in the first pressure chamber, and the drive shaft extends to the outside of the housing from the second pressure chamber. An end portion of the drive shaft is connected to the connecting portion.

Further, the diaphragm may be interposed between the receiving portion of the moving holder and a metal support member, and the end portion of the drive shaft may pass through the metal support member and the diaphragm and may be connected to the connecting portion.

In the actuator according to the aspect of the invention, a connection hole communicating with the space may be formed in the connecting portion of the moving holder, the end portion of the drive shaft may be inserted into the connection hole, and the end portion may be pressurized from the space, so that the drive shaft is fixed to the moving holder by caulking.

Since the end portion of the drive shaft can be fixed by caulking through the space that is formed in the holding portion holding the magnet, the drive shaft and the moving holder can be directly connected to each other. Further, while the relative positions of the drive shaft and the moving holder are accurately maintained, the drive shaft and the moving holder can be connected to each other by one time of caulking fixing work.

In the actuator according to the aspect of the invention, the moving holder may be made of a synthetic resin, the connection hole may be formed of a metal bush, and the end portion of the drive shaft may be inserted into the metal bush and may be fixed to the metal bush by caulking.

In the above-mentioned structure, the moving holder made of a synthetic resin and the drive shaft can be reliably connected to each other.

Further, in the actuator according to the aspect of the invention, the moving holder may be formed through the combination of a metal holder and a synthetic resin holder, the receiving portion may be formed at the metal holder, the holding portion may be formed at the synthetic resin holder, and the end portion of the drive shaft may be fixed to the metal holder by caulking.

In this case, the synthetic resin holder and the metal holder may be fixed to each other by an insert molding method or an outsert molding method.

Even though the moving holder is formed of two members, that is, the metal holder and the synthetic resin holder as described above, it is possible to directly connect the drive shaft to the metal holder by integrally fixing the metal holder to the synthetic resin holder in advance. Accordingly, the relative positions of the drive shaft and the magnet can be accurately maintained.

Furthermore, according to still another aspect of the invention, there is provided a method of assembling an actuator including a housing, a moving holder that is moved in the housing together with a diaphragm, a drive shaft that is connected to a connecting portion of a bottom of the moving holder and extends to the outside of the housing, a magnet that is fixed to the moving holder, and magnetism detectors that are fixed to the housing and detect a magnetic field generated from the magnet. The method includes a step of using a holding portion that holds the magnet and the moving holder in which a space formed in the holding portion and reaching the connecting portion is formed, and a step of performing work for exposing an end portion of the drive shaft, which is connected to the moving holder, to the space at the connecting portion and fixing the drive shaft to the moving holder from the space.

In the method of assembling an actuator according to the aspect of the invention, the moving holder in which a connection hole communicating with the space is formed in the connecting portion may be used, the end portion of the drive shaft may be inserted into the connection hole, and the end portion may be pressurized from the space, so that the drive shaft is fixed to the moving holder by caulking.

In the movement detecting device, the actuator, and the method of assembling the actuator according to the aspects of the invention, the drive shaft can be directly connected to the moving holder holding the magnet. Accordingly, fixing work can be performed by a minimum number of steps. In particular, since it is possible to fix the end portion of the drive shaft to the moving holder by using the space that is formed in the holding portion of the moving holder that holds the magnet, assembly work is also easily performed.

Further, since the end portion of the drive shaft can be fixed using the space by caulking or the like, the moving holder can be integrally molded with a synthetic resin or the metal holder and the synthetic resin holder can be integrally formed in advance by an insert molding method, an outsert molding method, or the like. For this reason, assembly work can be easily performed, and the relative positions of the drive shaft and the magnet can be accurately maintained after assembly.

### BRIEF DESCRIPTION OF THE DRAWINGS

Fig. 1 is a half cross-sectional perspective view showing a movement detecting device and an actuator according to a first embodiment of the invention;
Fig. 2 is a cross-sectional view showing the movement detecting device and the actuator according to the first embodiment of the invention;
Fig. 3 is a cross-sectional view showing operating states of the movement detecting device and the actuator according to the first embodiment of the invention;
Fig. 4 is an exploded perspective view showing work for assembling a drive shaft and a moving holder;
Fig. 5 is an enlarged cross-sectional view showing a connecting portion between the drive shaft and the moving holder; and
Fig. 6 is an enlarged cross-sectional view showing a movement detecting device and an actuator according to a second embodiment of the invention.

### DESCRIPTION OF THE PREFERRED EMBODIMENTS

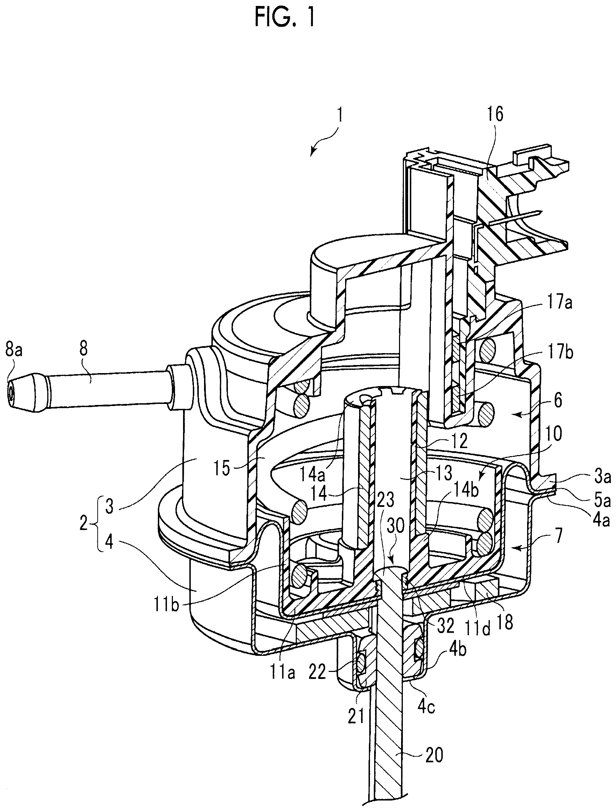

An actuator 1 according to a first embodiment shown in Figs. 1 to 3 is used in an exhaust gas recirculation device for an engine.

The actuator 1 includes a housing 2. The housing 2 includes an upper housing 3 and a lower housing 4. A diaphragm 5 is received in the housing 2. A joint flange 3a is formed at a lower peripheral edge portion of the upper housing 3, and a j oint flange 4a is formed at an upper peripheral edge portion of the lower housing 4. A peripheral edge portion 5a of the diaphragm 5 is interposed between the joint flanges 3a and 4a, and the upper housing 3 and the lower housing 4 are firmly fixed to each other.

The upper housing 3 is made of a synthetic resin, and the lower housing 4 is made of a metal plate. The diaphragm 5 is made of a flexible sheet that does not allow gas to permeate. For example, the diaphragm 5 is made of a composite material or the like of woven fabric and synthetic rubber.

An inner space of the housing 2 is divided into an upper space and a lower space by the diaphragm 5, and is partitioned into a first pressure chamber 6 of the upper housing 3 and a second pressure chamber 7 of the lower housing 4. A connecting pipe 8 integrally protrudes from the upper housing 3. As shown in Fig. 1, a connecting passage 8a communicating with the first pressure chamber 6 is formed in the connecting pipe 8. The first pressure chamber 6 is hermetically sealed from the outside at a portion except for the connecting passage 8a. Since the second pressure chamber 7 communicates with ambient air through a through hole 4c of a bearing portion 4b that is formed at a lower portion of the lower housing 4, the pressure of the second pressure chamber 7 is substantially the same as atmospheric pressure.

A moving holder 10 is provided in the housing 2. In the actuator 1 according to the first embodiment, the entire moving holder 10 is integrally made of a synthetic resin material. The moving holder 10 is mainly divided into a plunger portion 11 and a holding portion 12.

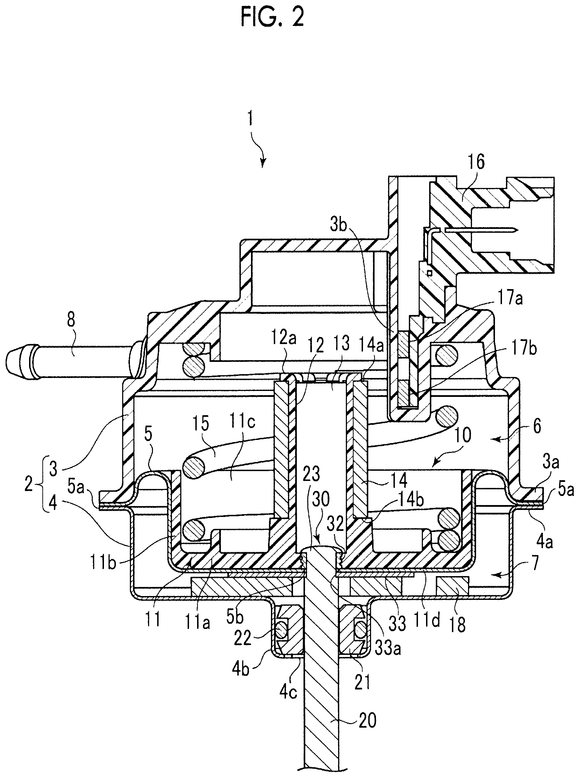

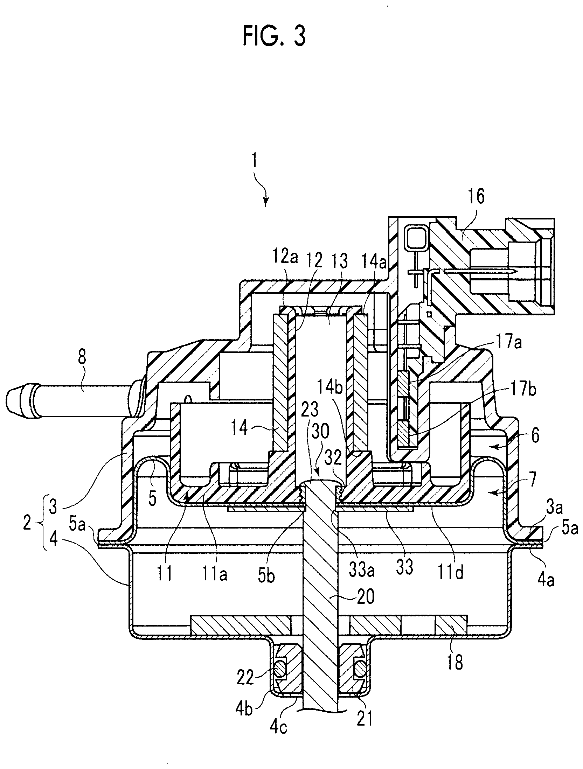

The plunger portion 11 includes a bottom 11a, a cylindrical side surface 11b, and a recess 11c that is surrounded by the bottom 11a and the side surface 11b. An inner surface of the recess 11c serves as a pressure applying surface that faces the first pressure chamber 6. An outer surface 11d of the bottom 11a and an outer surface of the side surface 11b are receiving portions with which the diaphragm 5 comes into contact. The moving holder 10 is positioned at the lowest portion in Fig. 2, and the moving holder 10 is moved to the uppermost portion in Fig. 3. In the meantime, the outer surface 11d of the bottom 11a always comes into contact with the diaphragm 5 and functions as a receiving portion.

A spring 15 is received in the housing 2. The spring 15 is a compression coil spring, and is disposed between an inner surface of the bottom 11a of the moving holder 10 and an upper inner surface of the upper housing 3. The moving holder 10 is always biased downward by the spring 15.

The holding portion 12 vertically extends toward the inside of the first pressure chamber 6 from the central portion of the bottom 11a. The holding portion 12 has a cylindrical shape, and a space 13 having a circular cross-section is continuously formed in the holding portion 12 from an upper end portion 12a to the center of the bottom 11a. An upper portion of the space 13 is opened to the first pressure chamber 6.

A cylindrical magnet 14 is mounted on the periphery of the holding portion 12. An upper end portion 14a and a lower end portion 14b of the magnet 14 are magnetized to different magnetic poles.

A sensor support 16 is mounted on the upper housing 3. Two magnetism detectors 17a and 17b are held by the sensor support 16. While the sensor support 16 is fixed to the upper housing 3, the magnetism detectors 17a and 17b face a thin portion 3b of the upper housing 3.

Each of the magnetism detectors 17a and 17b includes a magnetism sensing element, such as a Hall element or a magnetoresistive effect element. A magnetic field, which is directed to the lower end portion 14b from the upper end portion 14a, or a magnetic field, which is directed to the upper end portion 14a from the lower end portion 14b, is present on the side of the magnet 14 . When the moving holder 10 is vertically moved in the housing 2, the magnet 14 is moved just inside the thin portion 3b. The magnetic field is applied to the magnetism detectors 17a and 17b through the thin portion 3b, but the direction of a magnetic flux applied to the magnetism detectors 17a and 17b is changed according to the position of the magnet 14 in a vertical direction. Outputs, which are close to sine waves or cosine waves having a phase difference of 90°, can be obtained from the magnetism detectors 17a and 17b on the basis of the change of the direction of the magnetic flux. Since arctangent is calculated from these two outputs, the vertical position or the moving distance of the moving holder 10 can be detected as a change in a linear function.

The bearing portion 4b, which is deformed downward, is integrally formed on the lower surface of the lower housing 4, and the through hole 4c is formed at the lower end face of the bearing portion 4b. A thrust bearing 21 is held by the bearing portion 4b, and a seal ring 22 is mounted between the outer periphery of the thrust bearing 21 and an inner peripheral surface of the bearing portion 4b.

The actuator 1 is provided with a drive shaft 20. The drive shaft 20 is a metal shaft. The drive shaft 20 is slidably held by the thrust bearing 21, and extends from the inside of the second pressure chamber 7 toward an outer space that is present below the lower housing 4.

In the second pressure chamber 7, an upper end portion of the drive shaft 20 is fixed to a central portion of the bottom 11a of the moving holder 10 at a connecting portion 30.

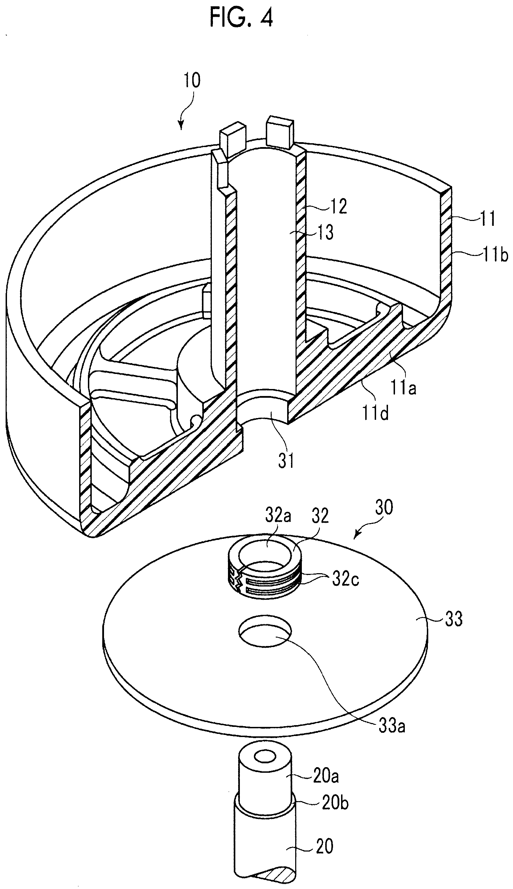

As shown in Fig. 4, a tip portion 20a of the drive shaft 20 forms a small-diameter portion of which the diameter is further small. A metal bush 32 is mounted on the central portion 31 of the bottom 11a of the moving holder 10. A connection hole 32a, which passes through the metal bush toward an inner space 13 of the holding portion 12 from the second pressure chamber 7, is formed in the metal bush 32. Further, grooves 32c, which extend in a circumferential direction, are formed on the outer peripheral surface of the metal bush 32, so that the outer peripheral surface of the metal bush forms an uneven surface.

An assembly method of fixing the moving holder 10 to the drive shaft 20 at the connecting portion 30 is as follows. Fig. 4 is an exploded perspective view of the connecting portion 30, but the diaphragm 5 is not shown in Fig. 4.

The metal bush 32 is integrally fixed to the central portion 31 of the bottom 11a of the moving holder 10 by an insert molding method or the like. The outer surface 11d, which is the receiving portion of the bottom 11a of the moving holder 10, is installed on one side of the diaphragm 5, and a disc-shaped metal support member 33 is installed on the other side of the diaphragm 5. While the diaphragm 5 is interposed between the moving holder 10 and the metal support member 33, the tip portion 20a of the drive shaft 20 is inserted into a center hole 33a of the metal support member 33, is further inserted into a through hole 5b formed at the central portion of the diaphragm 5, and is inserted into the connection hole 32a of the metal bush 32.

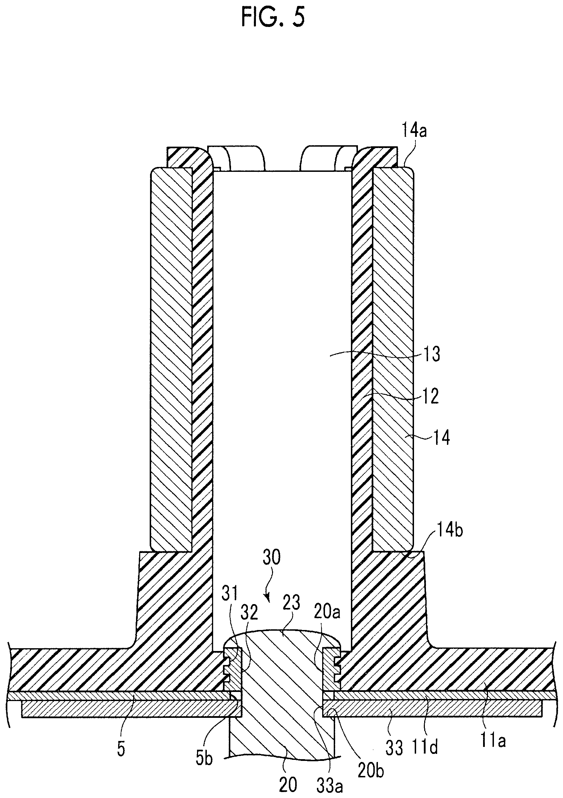

At this time, the tip portion 20a of the drive shaft 20 is exposed to the space 13 that passes through the inner portion of the holding portion 12 of the moving holder 10. While the drive shaft 20 and the metal support member 33 are fixed by a jig, a pressing tool is inserted into the space 13 and deforms the tip portion 20a by pressing and crushing the tip portion 20a. As a result, a caulked portion 23 shown in Fig. 5 is formed.

As shown in Fig. 5, pressure, which is applied when the caulked portion 23 is worked, is received by the metal bush 32 that is mounted on the moving holder 10. Accordingly, the moving holder 10 made of a synthetic resin is not broken. Since the outer peripheral surface of the metal bush 32 includes the grooves 32c so as to be formed in an uneven shape, a part of the moving holder 10 is formed so as to be bitten into the uneven portion when the metal bush 32 is fixed by an insert molding method or the like. Accordingly, the metal bush 32 is firmly fixed to the moving holder 10.

Since a stepped portion 20b is formed on the drive shaft 20 at a boundary of the tip portion 20a as shown in Fig. 5, the caulked portion 23 is worked while the metal support member 33 is caught by the stepped portion 20b. Since the metal bush 32, which receives caulking pressure, and the metal support member 33, which receives a force from the stepped portion 20b, are pressed so as to approach each other, the diaphragm 5 is firmly held between the moving holder 10 and the metal support member 33 and the drive shaft 20 is more firmly fixed.

Since the caulked portion 23 can be worked in the space 13 formed at the moving holder 10 in the assembly work, the moving holder 10, the diaphragm 5, the metal support member 33, and the drive shaft 20 can be positioned relative to each other and firmly fixed by fixing performed in one caulking step. Further, since the relative positions of the magnet 14 and the drive shaft 20, which are held by the holding portion 12, in an axial direction and a radial direction can be accurately determined after working, variations hardly occur in the relative positions.

In the work for assembling the actuator 1, the moving holder 10, the diaphragm 5, the metal support member 33, and the drive shaft 20 are fixed by the caulking step, the drive shaft 20 is inserted into the thrust bearing 21, and the upper and lower housings 3 and 4 are fixed to each other while the peripheral edge portion 5a of the diaphragm 5 is interposed between the joint flange 3a of the upper housing 3 and the joint flange 4a of the lower housing 4.

In another assembly method, while the drive shaft 20 is inserted into the thrust bearing 21 held by the lower housing 4, the tip portion 20a of the drive shaft 20 may be inserted into the metal bush 32 held by the moving holder 10 through the metal support member 33 and the diaphragm 5 and may be fixed by caulking.

Among the respective components shown in Figs. 1 to 3, the upper housing 3, the magnetism detectors 17a and 17b held by the upper housing 3, the moving holder 10, and the magnet held by the moving holder 10 form a movement detecting device of the embodiment of the invention. The movement detecting device can be distributed as a unit. Moreover, the movement detecting device is purchased and the drive shaft 20 is fixed by caulking, so that the actuator 1 shown in Figs. 1 to 3 is assembled.

When the actuator 1 is used in an exhaust gas recirculation device for an engine, the connecting pipe 8 is connected to an intake manifold of the engine and the drive shaft 20 is connected to an opening/closing driving mechanism of a waste gate valve.

When the air pressure of the first pressure chamber 6 is not lower than the air pressure of the second pressure chamber 7, the moving holder 10 is pressed down by the spring 15 as shown in Fig. 2. Accordingly, the metal support member 33, which supports the diaphragm 5 from below, is pressed against a stopper member 18 that is fixed to the bottom of the lower housing 4 and is made of metal.

When negative pressure relative to the air pressure of the second pressure chamber 7 is applied to the first pressure chamber 6 from the intake manifold, the moving holder 10 and the diaphragm 5 are moved up against a biasing force of the spring 15 as shown in Fig. 3. An opening of the waste gate valve is adjusted by the drive shaft 20 that is moved up together with the moving holder 10.

The direction of a magnetic field, which is applied to the magnetism detectors 17a and 17b from the magnet 14, is changed according to the change of the vertical movement position of the moving holder 10. The movement position of the moving holder 10 is detected through the detection of the change of the direction of the magnetic field.

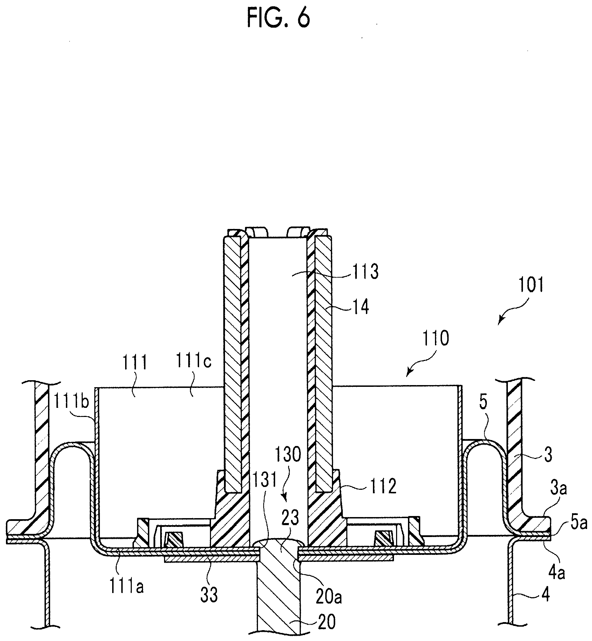

Fig. 6 shows an actuator 101 according to a second embodiment of the invention and a part of a movement detecting device that is used in the actuator.

In the actuator 101, a moving holder 110 includes a metal holder 111 and a synthetic resin holder 112. The metal holder 111 and the synthetic resin holder 112 are accurately positioned and integrally fixed to each other by an insert molding method or an outsert molding method.

In the insert molding method or the outsert molding method, a molten resin is injected into a cavity that is formed in a mold so as to come into contact with the metal holder while the metal holder 111 is fixed in the mold. Accordingly, the synthetic resin holder 112 is injection-molded, and the metal holder 111 and the synthetic resin holder 112 are integrally fixed to each other.

The metal holder 111 includes a bottom 111a, a side surface 111b, and a recess 111c, and the moving holder 110 functions as a plunger portion. The outer surface of the bottom 111a and the outer surface of the side surface 111b form a receiving portion for a diaphragm 5. Further, a connection hole 131 is formed at the central portion of the bottom 111a.

The synthetic resin holder 112 functions as a holding portion, and a cylindrical magnet 14 is held on the outer peripheral portion of the synthetic resin holder 112. A space 113 is formed at the central portion of the synthetic resin holder 112 that is the holding portion.

The moving holder 110 in which the metal holder 111 and the synthetic resin holder 112 are fixed to each other is handled as an integrated component.

As shown in Fig. 6, at a connecting portion 130, the diaphragm 5 is interposed between the moving holder 110 and the metal support member 33, and the tip portion 20a of the drive shaft 20 is inserted into the center hole 33a of the metal support member 33 and the through hole 5b of the diaphragm 5 and is further inserted into the connection hole 131 of the metal holder 111. Further, pressure forming is performed on the tip portion 20a of the drive shaft 20 from the space 113 of the synthetic resin holder 112, so that a caulked portion 23 is formed.

Since the space 113, which passes through the inside of the magnet 14, is also formed in the moving holder 110 in this embodiment, the caulked portion 23 can be worked in the space 113. Accordingly, the moving holder 110, the drive shaft 20, the diaphragm 5, and the metal support member 33 can be integrally fixed by a minimum number of steps.

Further, since the relative positions of the drive shaft 20 and the magnet 14 can be accurately determined in the axial direction and the radial direction, the accuracy of the detection of the movement position of the moving holder 110, which is performed by the movement detecting device, can be improved.

Meanwhile, in the embodiments, at the connecting portion 30 or 130, the tip portion 20a of the drive shaft 20 has been fixed to the moving holder 10 or 110 by caulking. However, for example, a tool may be inserted into the space 13 or 113 and fix the drive shaft 20 to the moving holder 10 or 110 by a bolt.

It should be understood by those skilled in the art that various modifications, combinations, sub-combinations and alterations may occur depending on design requirements and other factors insofar as they are within the scope of the appended claims of the equivalents thereof.

## Claims

1. A movement detecting device comprising:
a housing (2);
a moving holder (10, 110) that is moved in the housing together with a diaphragm (5);
a magnet (14) that is fixed to the moving holder, the magnet (14) having a cylindrical shape; and
magnetism detectors (17a, 17b) that are fixed to the housing and detect a magnetic field generated from the magnet,
wherein a holding portion (12) that holds the magnet, a receiving portion (11d) to which a moving force is applied from the diaphragm, and a connecting portion (30) where a drive shaft (20) extending to the outside of the housing is mounted are formed at the moving holder, and
a space (13), which passes through an inner portion of the holding portion and reaches the connecting portion, is formed in the moving holder,
**characterized in that**
the space (13) passes through the inside of the magnet (14), and the magnet (14) is mounted on the periphery of the holding portion.

2. The movement detecting device according to claim 1 or 2,
wherein the connecting portion is formed at a central portion of the receiving portion of the moving holder.

3. An actuator (1) comprising:
the movement detecting device according to any one of claims 1 to 2,
wherein an inner space of the housing is partitioned into a first pressure chamber (6) and a second pressure chamber (7) by the diaphragm, the magnet and the holding portion are positioned in the first pressure chamber, and the drive shaft extends to the outside of the housing from the second pressure chamber, and
an end portion of the drive shaft is connected to the connecting portion.

4. The actuator according to claim 4,
wherein the diaphragm is interposed between the receiving portion of the moving holder and a metal support member (33), and the end portion of the drive shaft passes through the metal support member and the diaphragm and is connected to the connecting portion.

5. The actuator according to claim 3 or 4,
wherein a connection hole (32a) communicating with the space is formed in the connecting portion of the moving holder, the end portion of the drive shaft is inserted into the connection hole, and the end portion is pressurized from the space, so that the drive shaft is fixed to the moving holder by caulking.

6. The actuator according to claim 5,
wherein the moving holder is made of a synthetic resin, the connection hole is formed of a metal bush (32), and the end portion of the drive shaft is inserted into the metal bush and is fixed to the metal bush by caulking.

7. The actuator according to claim 5,
wherein the moving holder is formed through the combination of a metal holder (111) and a synthetic resin holder (112), the receiving portion is formed at the metal holder, the holding portion is formed at the synthetic resin holder, and the end portion of the drive shaft is fixed to the metal holder by caulking.

8. The actuator according to claim 7,
wherein the synthetic resin holder and the metal holder are fixed to each other.

9. A method of assembling an actuator, the actuator including a housing, a moving holder that is moved in the housing together with a diaphragm, a drive shaft that is connected to a connecting portion of a bottom of the moving holder and extends to the outside of the housing, a magnet that is fixed to the moving holder, the magnet having a cylindrical shape) and being mounted on the periphery of the holding portion, and magnetism detectors that are fixed to the housing and detect a magnetic field generated from the magnet, the method comprising:
a step of using a holding portion that holds the magnet and the moving holder in which a space formed in the holding portion and reaching the connecting portion is formed, the space (13) passing through the inside of the magnet (14; and
a step of performing work for exposing an end portion of the drive shaft, which is connected to the moving holder, to the space at the connecting portion and fixing the drive shaft to the moving holder from the space.

10. The method of assembling an actuator according to claim 9,
wherein the moving holder in which a connection hole communicating with the space is formed in the connecting portion is used, the end portion of the drive shaft is inserted into the connection hole, and the end portion is pressurized from the space, so that the drive shaft is fixed to the moving holder by caulking.

## Patentansprüche

1. Bewegungsdetektionsvorrichtung, aufweisend:
ein Gehäuse (2);
einen beweglichen Halter (10, 110), der zusammen mit einer Membran (5) in dem Gehäuse bewegt wird;
einen Magneten (14), der an dem beweglichen Halter befestigt ist, wobei der Magnet (14) eine zylindrische Form aufweist; und
Magnetismusdetektoren (17a, 17b), die an dem Gehäuse befestigt sind und ein von dem Magneten erzeugtes Magnetfeld detektieren,
wobei ein Haltebereich (12), der den Magneten hält, ein Aufnahmebereich (11d), auf den eine Bewegungskraft von der Membran aufgebracht wird, und ein Verbindungsbereich (30), an dem eine sich zur Außenseite des Gehäuses erstreckende Antriebswelle (20) angebracht ist, an dem beweglichen Halter gebildet sind, und
wobei ein Raum (13), der durch einen Innenbereich des Haltebereichs verläuft und den Verbindungsbereich erreicht, in dem beweglichen Halter gebildet ist,
**dadurch gekennzeichnet,**
**dass** der Raum (13) durch das Innere des Magneten (14) verläuft und der Magnet (14) an der Peripherie des Haltebereichs angebracht ist.

2. Bewegungsdetektionsvorrichtung nach Anspruch 1,
wobei der Verbindungsbereich an einem zentralen Bereich des Aufnahmebereichs des beweglichen Halters gebildet ist.

3. Aktuator (1), aufweisend:
die Bewegungsdetektionsvorrichtung nach einem der Ansprüche 1 bis 2,
wobei ein Innenraum des Gehäuses durch die Membran in eine erste Druckkammer (6) und eine zweite Druckkammer (7) unterteilt ist, wobei der Magnet und der Haltebereich in der ersten Druckkammer angeordnet sind und sich die Antriebswelle von der zweiten Druckkammer zur Außenseite des Gehäuses erstreckt, und
wobei ein Endbereich der Antriebswelle mit dem Verbindungsbereich verbunden ist.

4. Aktuator nach Anspruch 3,
wobei die Membran zwischen dem Aufnahmebereich des beweglichen Halters und einem Metallabstützelement (33) angeordnet ist und sich der Endbereich der Antriebswelle durch das Metallstützelement und die Membran hindurch erstreckt und mit dem Verbindungsbereich verbunden ist.

5. Aktuator nach Anspruch 3 oder 4,
wobei eine mit dem Raum in Verbindung stehende Verbindungsöffnung (32a) in dem Verbindungsbereich des beweglichen Halters gebildet ist, wobei der Endbereich der Antriebswelle in die Verbindungsöffnung eingesetzt ist und der Endbereich von dem Raum her mit Druck beaufschlagt wird, so dass die Antriebswelle durch Breitdrücken an dem beweglichen Halter befestigt ist.

6. Aktuator nach Anspruch 5,
wobei der bewegliche Halter aus einem Kunstharz hergestellt ist, die Verbindungsöffnung aus einer Metallhülse (32) gebildet ist und der Endbereich der Antriebswelle in die Metallhülse eingesetzt ist und an der Metallhülse durch Breitdrücken befestigt ist.

7. Aktuator nach Anspruch 5,
wobei der bewegliche Halter durch die Kombination eines Metallhalters (111) und eines Kunstharzhalters (112) gebildet ist, der Aufnahmebereich an dem Metallhalter gebildet ist, der Haltebereich an dem Kunstharzhalter gebildet ist und der Endbereich der Antriebswelle an dem Metallhalter durch Breitdrücken befestigt ist.

8. Aktuator nach Anspruch 7,
wobei der Kunstharzhalter und der Metallhalter aneinander befestigt sind.

9. Verfahren zum Zusammenbauen eines Aktuators, wobei der Aktuator aufweist: ein Gehäuse, einen beweglichen Halter, der zusammen mit einer Membran in dem Gehäuse bewegt wird, eine Antriebswelle, die mit einem Verbindungsbereich eines Bodens des beweglichen Halters verbunden ist und sich zur Außenseite des Gehäuses erstreckt, einen Magneten, der an dem beweglichen Halter befestigt ist, wobei der Magnet eine zylindrische Form aufweist und an der Peripherie des Haltebereichs angebracht ist, sowie Magnetismusdetektoren, die an dem Gehäuse befestigt sind und ein von dem Magneten erzeugtes Magnetfeld detektieren, wobei das Verfahren folgende Schritte aufweist:
einen Schritt zur Verwendung eines Haltebereichs, der den Magneten hält, und des beweglichen Halters, in dem ein sich bis zu dem Verbindungsbereich erstreckender Raum in dem Haltebereich gebildet ist, wobei der Raum (13) durch das Innere des Magneten (14) verläuft; und
einen Arbeitsschritt zum Freilegen eines Endbereichs der Antriebswelle, der mit dem beweglichen Halter verbunden ist, an dem Raum an dem Verbindungsbereich und zum Befestigen der Antriebswelle an dem beweglichen Halter von dem Raum her.

10. Verfahren zum Zusammenbauen eines Aktuators nach Anspruch 9, wobei der bewegliche Halter, in dem eine mit dem Raum in Verbindung stehende Verbindungsöffnung in dem Verbindungsbereich gebildet ist, verwendet wird, der Endbereich der Antriebswelle in die Verbindungsöffnung eingesetzt wird und der Endbereich von dem Raum her mit Druck beaufschlagt wird, so dass die Antriebswelle an dem beweglichen Halter durch Breitdrücken befestigt wird.

## Revendications

1. Dispositif de détection du mouvement, comprenant :
un boîtier (2) ;
un support mobile (10, 110) qui se déplace dans le boîtier conjointement avec un diaphragme (5) ;
un aimant (14) qui est fixé au support mobile, l'aimant (14) possédant une configuration de forme cylindrique ; et
des détecteurs du magnétisme (17a, 17b) qui sont fixés au boîtier et qui détectent un champ magnétique généré à partir de l'aimant ;
dans lequel une portion de maintien (12) qui maintient l'aimant, une portion de réception (11d) sur laquelle s'exerce une force en mouvement à partir du diaphragme et une portion de liaison (30) dans laquelle est monté un arbre d'entraînement (20) s'étendant à l'extérieur du boîtier sont prévues sur le support mobile ; et
un espace (13), qui passe par une portion interne de la portion de maintien et qui atteint la portion de liaison, est réalisé dans le support mobile ;
**caractérisé en ce que**
l'espace (13) passe à travers l'intérieur de l'aimant (14) et l'aimant (14) est monté sur la périphérie de la portion de maintien.

2. Dispositif de détection du mouvement selon la revendication 1 ou 2, dans lequel la portion de liaison est réalisée dans une portion centrale de la portion de réception du support mobile.

3. Actionneur (1) comprenant :
le dispositif de détection du mouvement selon l'une quelconque des revendications 1 ou 2 ;
dans lequel un espace interne du boîtier est réparti en une première chambre de pression (6) et une seconde chambre de pression (7) par le diaphragme, l'aimant et la portion de maintien sont disposés dans la première chambre de pression, et l'arbre d'entraînement s'étend à l'extérieur du boîtier à partir de la seconde chambre de pression ; et
une portion terminale de l'arbre d'entraînement est reliée à la portion de liaison.

4. Actionneur selon la revendication 4,
dans lequel le diaphragme est intercalé entre la portion de réception du support mobile et un élément de support métallique (33), et la portion terminale de l'arbre d'entraînement passe à travers l'élément de support métallique et le diaphragme et est reliée à la portion de liaison.

5. Actionneur selon la revendication 3 ou 4,
dans lequel un trou de connexion (32a) communiquant avec l'espace est formé dans la portion de liaison du support mobile, la portion terminale de l'arbre d'entraînement est insérée dans le trou de connexion et la portion terminale est mise sous pression à partir de l'espace d'une manière telle que l'arbre d'entraînement est fixé au support mobile par matage.

6. Actionneur selon la revendication 5,
dans lequel le support mobile est réalisé partir d'une résine synthétique, le trou de connexion est réalisé sous la forme d'une douille métallique (32), et la portion terminale de l'arbre d'entraînement est insérée dans la douille métallique et est fixée à la douille métallique par matage.

7. Actionneur selon la revendication 5,
dans lequel le support mobile est réalisé via la combinaison d'un support métallique (111) et d'un support en résine synthétique (112), la portion de réception est réalisée sur le support métallique, la portion de maintien est réalisée sur le support en résine synthétique et la portion terminale de l'arbre d'entraînement est fixée au support métallique par matage.

8. Actionneur selon la revendication 7,
dans lequel le support en résine synthétique et le support en métal sont fixés l'un à l'autre.

9. Procédé de montage d'un actionneur, l'actionneur englobant un boîtier, un support mobile qui se déplace dans le boîtier conjointement avec un diaphragme, un arbre d'entraînement qui est relié à une portion de liaison d'une base du support mobile et qui s'étend à l'extérieur du boîtier, un aimant qui est fixé au support mobile, l'aimant possédant une configuration de forme cylindrique et étant monté sur la périphérie de la portion de maintien et des détecteurs du magnétisme qui sont fixés au boîtier et qui détectent un champ magnétique généré à partir de l'aimant, le procédé comprenant :
une étape consistant à utiliser une portion de maintien qui maintient l'aimant et le support mobile, dans laquelle est formé un espace conçu dans la portion de maintien et atteignant la portion de liaison, l'espace (13) passant à travers l'intérieur de l'aimant (14) ; et
une étape consistant à mettre en oeuvre un travail pour exposer une portion terminale de l'arbre d'entraînement, qui est relié au support mobile, à l'espace à la portion de liaison et pour fixer l'arbre d'entraînement au support mobile à partir de l'espace.

10. Procédé de montage d'un actionneur selon la revendication 9,
dans lequel on utilise le support mobile dans lequel un trou de connexion communiquant avec l'espace est formé dans la portion de liaison, on insère la portion terminale de l'arbre d'entraînement dans le trou de connexion et on met sous pression la portion terminale à partir de l'espace, d'une manière telle que l'arbre d'entraînement est fixé au support mobile par matage.
